# EUROPÄISCHE PATENTSCHRIFT

(11) **EP 2 958 760 B1**
(45) Veröffentlichungstag und Bekanntmachung des Hinweises auf die Patenterteilung: **22.02.2017**
(21) Anmeldenummer: 13819019.4
(22) Anmeldetag: 19.12.2013
(51) Int. Cl.: B60C 23/04

(54) **VERFAHREN FÜR EINE ZUORDNUNG VON REIFENPOSITIONEN AN EINEM FAHRZEUG MIT EINEM REIFENDRUCKKONTROLLSYSTEM**
METHOD FOR ASSOCIATING TIRE POSITIONS ON A VEHICLE HAVING A TIRE-PRESSURE MONITORING SYSTEM
PROCÉDÉ DESTINÉ À ASSOCIER DES POSITIONS DE PNEUMATIQUE SUR UN VÉHICULE AU MOYEN D'UN SYSTÈME DE CONTRÔLE DE LA PRESSION DES PNEUMATIQUES

(30) Priorität: 19.02.2013 DE 102013101619
(43) Veröffentlichungstag der Anmeldung: 30.12.2015
(73) Patentinhaber: Continental Reifen Deutschland GmbH, 30165 Hannover (DE)
(72) Erfinder: LEHMANN, Jörg, 30453 Hannover (DE); CYLLIK, Adrian, 30159 Hannover (DE); HANNA, Jörg, 32289 Rödinghausen (DE); SURISETTI, Siva Sanksar, 30419 Hannover (DE); SCHER, Andreas, 31303 Burgdorf (DE)
(74) Vertreter: Widjaja, Wira
(86) Internationale Anmeldenummer: PCT/EP2013/077270
(87) Internationale Veröffentlichungsnummer: WO 2014/127865

(56) Entgegenhaltungen:
- TW-A- 200 929 085
- US-A1- 2002 130 771
- US-A1- 2008 001 729
- US-A1- 2008 164 988
- ATEQ-15 ET AL: "ATEQ VT 55 User Manual", INTERNET CITATION, November 2009 (2009-11), Seiten 1-38, XP002690038, Gefunden im Internet: URL:http://www.orange-electronic.com/en/pr oducts/oe_sensor/VT55d-U0S.pdf [gefunden am 2013-01-10]

## Beschreibung

Die Erfindung betrifft ein Verfahren für eine Zuordnung von Reifenpositionen an einem Fahrzeug mit einem Reifendruckkontrollsystem.

Mit Transpondern versehene Reifenmodule werden im Reifen, insb. bei Reifensensoren für LKW-Reifen, für verschiedene Aufgaben eingesetzt. Hierzu zählt insbesondere eine Reifenidentifikation, mit der ein Automobilhersteller u. a. schnell sowie automatisiert feststellen kann, aus welchem Reifenwerk ein bestimmter Reifen geliefert wurde und an welches Fahrzeug der Reifen montiert wurde. Andere Aufgaben sind in der Regel eine Luftdrucküberwachung, eine Temperaturmessung oder die Messung von mechanischen Spannungszuständen im Reifen. Moderne Transponder bestehen aus einem Elektronikbauteil bzw. -Chip, in dem Sensorelemente angeordnet sein können sowie aus einer an dieses Elektronikbauteil angeschlossenen Antenne. Ein Beispiel für einen solchen Transponder offenbart die DE 102 43 441 A1.
Weitere bekannte Vorrichtungen und Verfahren offenbaren folgende Dokumente:
- US 2008/164988 A1
- US 2008/001729 A1
- US 2008/001729 A1
- US 2002/130771 A1
- TW 200 929 085 A
- ATEQ-15 ET AL: "ATEQ VT 55 User Manual",
INTERNET CITATION, November 2009 (2009-11), Seiten 1-38, URL:http://www.orange-electronic.com/en/products/oe_sensor/ VT55d-UOS.pdf

Ein Problem bei der Reifendrucküberwachung von Nutzfahrzeugen besteht darin, dass jeder Fahrzeugreifen mit einem Reifenmodul für eine Druckkontrolle versehen ist und jedes Reifenmodul einer Reifenposition am Fahrzeug zugeordnet werden muss.

Der Erfindung lag die Aufgabe zugrunde, ein Verfahren bereitzustellen, mit dem auf einfache Weise und mit einer hohen Genauigkeit jedes Reifenmodul der richtigen Reifenposition am Fahrzeug zugeordnet werden kann.

Gelöst wird die Aufgabe durch ein Verfahren nach Anspruch 1.

Ein Vorteil der Erfindung ist insbesondere darin zu sehen, dass durch das erfindungsgemäße Verfahren eine einfache und sichere Zuordnung der Reifenmodule zu den einzelnen Reifenpositionen am Fahrzeug erfolgt. Der Bediener des Erfassungsgerätes hat lediglich den Anweisungen auf dem Display des Erfassungsgerätes zu folgen. Die korrekte Auswertung der Antwortsignale der Reifenmodule und deren eindeutige Zuordnung erfolgen automatisiert durch das Erfassungsgerät.

Es ist vorgesehen, dass bei Schritt e) das mobile Erfassungsgerät bei direkt hintereinander angeordneten Fahrzeugreifen und/oder Zwillingsreifen für Nutzfahrzeuge die Signalamplitude des Abfragesignals derart eingestellt wird, dass eine richtige Zuordnung des jeweiligen Reifenmoduls zum entsprechenden Fahrzeugreifen erfolgt. Aufgrund der räumlichen Nähe kann es bei diesen Fahrzeugreifen zu Fehlmessungen kommen, die durch die intelligente Erfassungsstrategie vermieden werden kann.

In einer weiteren vorteilhaften Weiterbildung der Erfindung ist vorgesehen, dass bei Schritt e) das mobile Erfassungsgerät auf einem Display die durchzuführende Erfassungsbewegung des Erfassungsgerätes am Fahrzeugreifen anzeigt, wobei mit der Erfassungsbewegung eine Startposition am Fahrzeugreifen, eine Bewegungsrichtung und eine Drehgeschwindigkeit für das Erfassungsgerät auf dem Display angezeigt wird.
Dadurch werden Fehlmessungen aufgrund eines in einem benachbarten Fahrzeugreifen angeordneten Reifenmoduls weitestgehend ausgeschlossen.

In einer weiteren vorteilhaften Weiterbildung der Erfindung ist vorgesehen, dass die Startposition beim ersten hinteren Fahrzeugreifen, bezogen auf eine analoge Zeitanzeige, bei etwa 11 Uhr liegt und die Bewegungsrichtung des Erfassungsgerätes im Uhrzeigersinn angezeigt wird.
Dadurch wird eine fehlerhafte Erfassung aufgrund eines in einem benachbarten Fahrzeugreifen angeordneten Reifenmoduls weitestgehend ausgeschlossen.

In einer weiteren vorteilhaften Weiterbildung der Erfindung ist vorgesehen, dass die Startposition bei nachfolgenden Fahrzeugreifen, in Abhängigkeit von der Reifenposition am Fahrzeug und bezogen auf eine analoge Zeitanzeige, bei etwa 2 Uhr liegt und die Bewegungsrichtung des Erfassungsgerätes entgegen zum Uhrzeigersinn angezeigt wird. Dadurch wird eine fehlerhafte Erfassung aufgrund eines in einem benachbarten Fahrzeugreifen angeordneten Reifenmoduls weitestgehend ausgeschlossen.

In einer weiteren vorteilhaften Weiterbildung der Erfindung ist vorgesehen, dass bei Schritt e) das mobile Erfassungsgerät bei einem fahrzeugäußeren Zwillingsreifen mit einer niedrigen Signalamplitude des Abfragesignales startet und nachfolgend die Signalamplitude in 3 Schritten erhöht wird, bis das im fahrzeugäußeren Zwillingsreifen angeordnete Reifenmodul antwortet und eine Reifenmodul-Identifizierung erfolgt ist. Auf diese Weise wird sichergestellt, dass zunächst nur der fahrzeugäußere Zwillingsreifen mit einem Antwortsignal reagiert.

In einer weiteren vorteilhaften Weiterbildung der Erfindung ist vorgesehen, dass bei Schritt e) das mobile Erfassungsgerät bei einem fahrzeuginneren Zwillingsreifen mit einer höheren Signalamplitude des Abfragesignales startet und nachfolgend die Signalamplitude in 3 Schritten erhöht wird, bis das im fahrzeuginneren Zwillingsreifen angeordnete Reifenmodul antwortet und eine Reifenmodul-Identifizierung erfolgt ist. Auf diese Weise wird sichergestellt, dass bei den fahrzeuginneren Zwillingsreifen die Stärke der Signalamplitude ausreichend ist, um das Reifenmodul im fahrzeuginneren Zwillingsreifen zu erreichen.

In einer weiteren vorteilhaften Weiterbildung der Erfindung ist vorgesehen, dass bei einer mehrfachen Zwillingsbereifung zunächst alle Reifenmodule der fahrzeugäußeren Reifen von einer Fahrzeugseite identifiziert und zugeordnet werden, wobei nachfolgend die Reifenmodule der fahrzeuginneren Reifen der gleichen Fahrzeugseite identifiziert und zugeordnet werden.
Auf diese Weise hat der Bediener kurze Wege mit dem Erfassungsgerät zurück zu legen.

In einer weiteren vorteilhaften Weiterbildung der Erfindung ist vorgesehen, dass bei Schritt f) die bereits erfassten und identifizierten Reifenmodule vom Erfassungsgerät ignoriert werden, wenn von diesen Reifenmodulen weitere Antwortsignale durch das Erfassungsgerät empfangen werden.
Dadurch werden Fehlzuordnungen von Reifenmodulen auf einfache Weise vermieden.

In einer weiteren vorteilhaften Weiterbildung der Erfindung ist vorgesehen, dass bei Schritt g) eine doppelte Prüfung der Antwortsignale erfolgt, wobei die Identifikationsdaten des Reifenmoduls erst als richtig durch das Erfassungsgerät akzeptiert werden, wenn die gleichen Identifikationsdaten mindestens zweimal hintereinander in einem kurzen Zeitintervall durch das Erfassungsgerät empfangen werden.
Dadurch werden Fehlzuordnungen von Reifenmodulen effektiv vermieden.

In einer weiteren vorteilhaften Weiterbildung der Erfindung ist vorgesehen, dass bei Schritt g) eine Überprüfung erfolgt, ob es sich bei dem empfangenen Datentelegramm um ein Antwortsignal und nicht um ein periodisch verschicktes Signal des Reifenmoduls handelt. Dadurch werden Fehlzuordnungen von Reifenmodulen effektiv vermieden.

In einer weiteren vorteilhaften Weiterbildung der Erfindung ist vorgesehen, dass bei Schritt g) eine Überprüfung erfolgt, ob das Reifenmodul sich in einem deaktivierten Zustand befindet, wobei nachfolgend bei Indentifizierung einer Deaktivierung das Reifenmodul automatisch in einen aktiven Zustand versetzt wird.
Dadurch muss der Einlernvorgang zur Erfassung der Reifenmodule nicht unterbrochen werden.

In einer weiteren vorteilhaften Weiterbildung der Erfindung ist vorgesehen, dass der Erfassungsmodus am Erfassungsgerät unterbrochen wird, wenn bei mindestens zwei Messungen zwei Antworttelegramme von unterschiedlichen Reifenmodulen direkt hintereinander empfangen werden und keine eindeutige Reifenposition-Zuordnung erfolgen kann.

Bei dieser Fallkonstellation könnten sich zwei Reifenmodule in unmittelbare Nähe zueinander befinden.

In einer weiteren vorteilhaften Weiterbildung der Erfindung ist vorgesehen, dass der Bediener angewiesen wird das Fahrzeug etwa einen Meter weiter zu fahren und die Messung mit dem Erfassungsgerät am letzten Fahrzeugreifen zu wiederholen, wenn trotz mehrmaliger Messung mit dem Erfassungsgerät keine eindeutige Reifenposition-Zuordnung erfolgen kann.
Durch die Weiterbewegung des Fahrzeuges um etwa einen Meter, werden die Reifenmodule ebenfalls räumlich auseinander bewegt. Eine anschließende Messung müsste dann zu einer eindeutigen Reifenmodul-Zuordnung führen.

An einem Ausführungsbeispiel soll die Erfindung nachfolgend erläutert werden. Es zeigt:
- Fig. 1:: eine Aufsicht auf eine Reifenanordnung für eine Zugmaschine,
- Fig. 2:: eine Aufsicht auf den hinteren Teil der Reifenanordnung,
- Fig. 3:: eine Seitenansicht von Fahrzeugreifen 1 und 2.

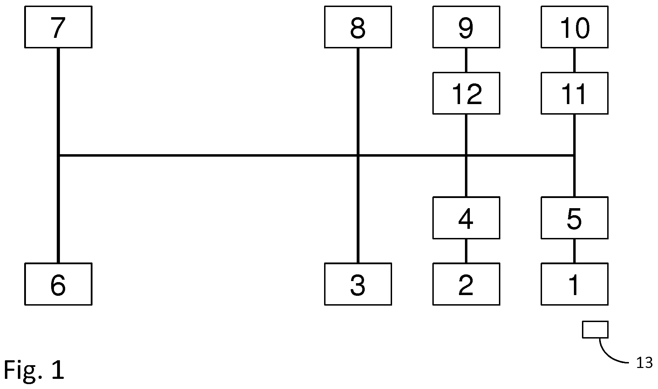

Fig. 1 zeigt schematisch eine Aufsicht auf eine Reifenanordnung für eine Zugmaschine mit 12 Fahrzeugreifen, wobei in jedem Fahrzeugreifen in den Reifenhohlraum jeweils ein Reifenmodul montiert wurde. Das Reifenmodul wird auf der Reifeninnenseite gegenüberliegend zum Laufstreifen i.a. mittels einer Klebeverbindung montiert.
Zunächst werden über eine Tastatur am Erfassungsgerät 13 die wichtigsten Fahrzeugparameter eingegeben, wie z.B. die Achsenzahl, Reifen pro Achse, Solldrücke, Warnwerte etc..
Anschließend wird über das Display des Erfassungsgerätes das Fahrzeug mit den Reifenpositionen in einer Aufsicht dargestellt und der Bediener wird angewiesen z.B. zum ersten Fahrzeugreifen 1 zu gehen, um dort das erste Reifenmodul im ersten Fahrzeugreifen 1 zu identifizieren.
Nach dem das Reifenmodul im ersten Fahrzeugreifen 1 erfasst wurde, wird der Bediener aufgefordert, den Vorgang in der dargestellten Reihenfolge an den Fahrzeugreifen 2 bis 12 fortzusetzen. Der Einlernvorgang ist abgeschlossen, wenn alle Reifenmodule in den einzelnen Fahrzeugreifen 1 - 12 identifiziert und einer Reifenposition zugeordnet worden sind. Anschließend werden die Daten an eine zentrale Einheit der Reifendrucküberwachung im Fahrzeug übertragen. Bei einer Reifendruck-Warnmeldung kann dem Fahrer direkt angezeigt werden, welcher der Fahrzeugreifen einen Minderdruck aufweist.

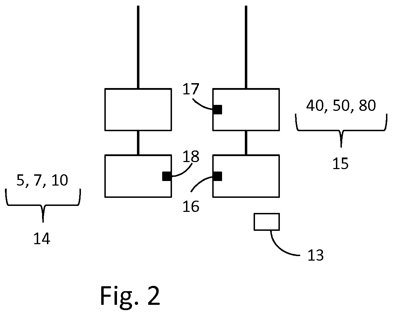

Die Fig. 2 zeigt eine Aufsicht auf den hinteren Teil der Reifenanordnung in der Fig. 1. Das Erfassungsgerät 13 sendet zunächst mit einer niedrigen Signalamplitude im Low-Frequency-Bereich, im dargestellten Wertebereich 14, um das Reifenmodul 16 im ersten Fahrzeugreifen 1 zu identifizieren. Der Wertebereich 14 wird in 3 Schritten mit den Signalwerten von etwa 5, 7 und 10 erhöht, bis das Reifenmodul 16 eindeutig identifiziert werden konnte. Die Signalwerte orientieren sich an einen am Erfassungsgerät einstellbaren Wertebereich von minimal 0 bis maximal 180.
Später sendet das Erfassungsgerät 13 mit einer höheren Signalamplitude, im dargestellten Wertebereich 15, um das Reifenmodul 17 im fünften Fahrzeugreifen 5 zu identifizieren. Der Wertebereich 15 wird in 3 Schritten mit den Signalwerten von etwa 40, 50 und 80 erhöht, bis das Reifenmodul 17 eindeutig identifiziert werden konnte. Die höheren Signalwerte sind insb. aufgrund der größeren Distanz zum Erfassungsgerät notwendig.

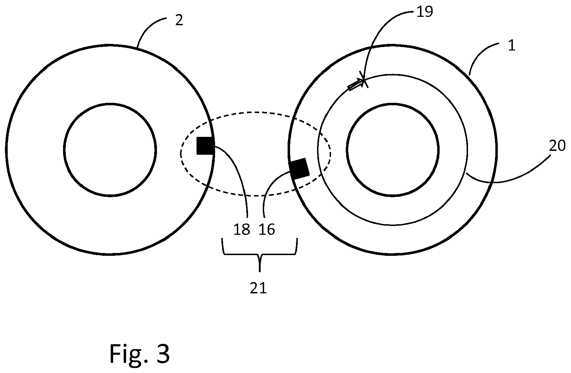

Fig. 3 zeigt die Fahrzeugreifen 1 und 2 in einer Seitenansicht. Es wird gezeigt, wie das Erfassungsgerät an der Seitenwand vorbei bewegt werden soll. Die Startposition 19 gibt die Anfangsposition für das Erfassungsgerät am Fahrzeugreifen wieder. Beim Fahrzeugreifen 1 liegt diese Startposition in etwa bei 11 Uhr, bezogen auf eine analoge Zeitanzeige. Anschließend ist das Erfassungsgerät in Drehrichtung 20 mit einer vorgegeben Geschwindigkeit an der Seitenwand vorbei zu führen, um das Reifenmodul 16 zu identifizieren zu können. Die Signalamplitude wird schrittweise in drei Stufen nach jeder Umdrehung des Erfassungsgerätes entlang der Seitenwand erhöht, bis das Reifenmodul 16 identifiziert werden konnte. Es sind i.a. maximal 3 Umrundungen mit dem Erfassungsgerät vorgesehen.

Der Bereich 21 stellt den kritischen Messbereich dar, da sich in diesem Bereich gegenüberliegend im Fahrzeugreifen 2 das Reifenmodul 18 befindet. Das Reifenmodul 18 könnte aufgrund seiner räumlichen Nähe zu einer Fehlzuordnung führen.

### Bezugszeichenliste

- 1: erster hinterster fahrzeugäußerer Fahrzeugreifen mit einem ersten im Reifenhohlraum angeordneten Reifenmodul
- 2: zweiter fahrzeugäußerer Fahrzeugreifen mit einem Reifenmodul
- 3: dritter fahrzeugäußerer Fahrzeugreifen mit einem Reifenmodul
- 4: vierter fahrzeuginnerer Fahrzeugreifen mit einem Reifenmodul
- 5: fünfter fahrzeuginnerer Fahrzeugreifen mit einem Reifenmodul
- 6: sechster fahrzeugäußerer Fahrzeugreifen mit einem Reifenmodul
- 7 - 12: Fahrzeugreifen mit Reifenmodulen der gegenüberliegenden Fahrzeugseite
- 13: mobiles Erfassungsgerät
- 14: Werte für Signalamplituden zur Erfassung des Reifenmoduls im ersten fahrzeugäußeren Reifen
- 15: Werte für Signalamplituden zur Erfassung des Reifenmoduls im fünften fahrzeuginneren Reifen
- 16: Reifenmodul im ersten Fahrzeugreifen
- 17: Reifenmodul im fünften Fahrzeugreifen
- 18: Reifenmodul im zweiten Fahrzeugreifen
- 19: Startposition für Erfassungsgerät (in etwa 11 Uhr bezogen auf eine analoge Zeitanzeige)
- 20: Drehrichtung für das Erfassungsgerät
- 21: kritischer Messbereich für das Erfassungsgerät

## Patentansprüche

1. Verfahren für eine Zuordnung von Reifenpositionen an einem Fahrzeug mit einem Reifendruckkontrollsystem mit folgenden Schritten:
a)Eingabe von Fahrzeugdaten und Fahrzeugreifen-Informationen mit einem mobilen Erfassungsgerät (13),
b) Analyse der eigegebenen Informationen mit dem mobilen Erfassungsgerät (13),
c) Mitteilung einer Anweisung an den Bediener des mobilen Erfassungsgerätes (13), wobei mit der Anweisung dem Bediener der erste Fahrzeugreifen (1) zur Durchführung einer ersten Reifenmodul-Indentifizierung angezeigt wird,
d)Positionierung des mobilen Erfassungsgerätes (13) in der Nähe des ersten Fahrzeugreifens (1), der durch das Erfassungsgerät (13) vorgeben wird,
e) Aktivierung eines Abfragesignales mit einer durch das Erfassungsgerät (13) vorgegeben Sendefrequenz mit einer vorgegebenen Signalamplitude an ein im Fahrzeugreifen (13) angeordnetes Reifenmodul (16),
wobei das Reifenmodul (16) zumindestens einen Sensor für eine Reifendruckkontrolle umfasst,
*wobei das mobile Erfassungsgerät (13) bei direkt hintereinander angeordneten Fahrzeugreifen (1, 2) und*/*oder Zwillingsreifen (1, 5) für Nutzfahrzeuge die Signalamplitude (14, 15) des Abfragesignals derart eingestellt wird, dass eine richtige Zuordnung des jeweiligen Reifenmoduls zum entsprechenden Fahrzeugreifen erfolgt*,
f) Erfassung eines Antwortsignal vom Reifenmodul (16), wobei das Antwortsignal zumindestens die Identifikationsdaten des Reifenmoduls (16) umfasst,
g) Auswerten des Antwortsignales des Reifenmodules (16) und Zuordnung des identifizierten Reifenmoduls (16) zu einer Reifenposition am Fahrzeug,
h) Speichern der Zuordnung des identifizierten Reifenmoduls (16) in einem Speicher des Erfassungsgerätes (13)
i) Anzeige einer weiteren Anweisung an den Bediener des mobilen Erfassungsgerätes (13),
wobei mit der Anweisung dem Bediener der nächste Fahrzeugreifen (2) zur Durchführung einer nächsten Reifenmodul-Indentifizierung angezeigt wird,
j) Positionierung des mobilen Erfassungsgerätes(13) in der Nähe des nächsten Fahrzeugreifens (2) zur Durchführung einer nächsten Reifenmodul-Indentifizierung,
k) Wiederholen der Schritte e) bis j) bis alle Reifenmodule indentifiziert und jeweils einer Reifenposition am Fahrzeug zugeordnet worden sind,
1) Übertragen der mit dem mobilen Erfassungsgerät (13) erfassten und ausgewerteten Daten an eine zentrale Einheit des Reifendruckkontroll-System am Fahrzeug,
wobei das Reifendruckkontroll-System jeder Reifenposition am Fahrzeug jeweils eine Reifinodul-Identifzierung zuordnet,
wodurch dem Fahrer bei einer Reifendruck-Warnmeldung die jeweilige Reifenposition am Fahrzeug angezeigt werden kann.

2. Verfahren nach Anspruch 1,
**dadurch gekennzeichnet, dass**
bei Schritt e) das mobile Erfassungsgerät (13) auf einem Display die durchzuführende Erfassungsbewegung des Erfassungsgerätes (13) am Fahrzeugreifen anzeigt,
wobei mit der Erfassungsbewegung eine Startposition (19) am Fahrzeugreifen, eine Bewegungsrichtung (20) und eine Drehgeschwindigkeit für das Erfassungsgerät (13) auf dem Display angezeigt wird.

3. Verfahren nach einem der vorhergehenden Ansprüche,
**dadurch gekennzeichnet, dass**
die Startposition (19) beim ersten hinteren Fahrzeugreifen (1), bezogen auf eine analoge Zeitanzeige, bei etwa 11 Uhr liegt und die Bewegungsrichtung (20) des Erfassungsgerätes (13) im Uhrzeigersinn angezeigt wird.

4. Verfahren nach einem der vorhergehenden Ansprüche,
**dadurch gekennzeichnet, dass**
die Startposition (19) bei nachfolgenden Fahrzeugreifen, in Abhängigkeit von der Reifenposition am Fahrzeug und bezogen auf eine analoge Zeitanzeige, bei etwa 2 Uhr liegt und die Bewegungsrichtung des Erfassungsgerätes (13) entgegen zum Uhrzeigersinn angezeigt wird.

5. Verfahren nach einem der vorhergehenden Ansprüche,
**dadurch gekennzeichnet, dass**
bei Schritt e) das mobile Erfassungsgerät (13) bei einem fahrzeugäußeren Zwillingsreifen (1) mit einer niedrigen Signalamplitude des Abfragesignales startet und nachfolgend die Signalamplitude in 3 Schritten erhöht wird, bis das im fahrzeugäußeren Zwillingsreifen (1) angeordnete Reifenmodul (16) antwortet und eine Reifenmodul-Identifizierung erfolgt ist.

6. Verfahren nach einem der vorhergehenden Ansprüche,
**dadurch gekennzeichnet, dass**
bei Schritt e) das mobile Erfassungsgerät (13) bei einem fahrzeuginneren Zwillingsreifen (5) mit einer höheren Signalamplitude des Abfragesignales startet und nachfolgend die Signalamplitude in 3 Schritten erhöht wird, bis das im fahrzeuginneren Zwillingsreifen (5) angeordnete Reifenmodul (17) antwortet und eine Reifenmodul-Identifizierung erfolgt ist.

7. Verfahren nach einem der vorhergehenden Ansprüche,
**dadurch gekennzeichnet, dass**
bei einer mehrfachen Zwillingsbereifung zunächst alle Reifenmodule der fahrzeugäußeren Reifen von einer Fahrzeugseite identifiziert und zugeordnet werden,
wobei nachfolgend die Reifenmodule der fahrzeuginneren Reifen der gleichen Fahrzeugseite identifiziert und zugeordnet werden.

8. Verfahren nach einem der vorhergehenden Ansprüche,
**dadurch gekennzeichnet, dass**
bei Schritt f) die bereits erfassten und identifizierten Reifenmodule vom Erfassungsgerät (13) ignoriert werden, wenn von diesen Reifenmodulen weitere Antwortsignale durch das Erfassungsgerät (13) empfangen werden.

9. Verfahren nach einem der vorhergehenden Ansprüche,
**dadurch gekennzeichnet, dass**
bei Schritt g) eine doppelte Prüfung der Antwortsignale erfolgt, wobei die Identifikationsdaten des Reifenmoduls erst als richtig durch das Erfassungsgerät (13) akzeptiert werden, wenn die gleichen Identifikationsdaten mindestens zweimal hintereinander in einem kurzen Zeitintervall durch das Erfassungsgerät (13) empfangen werden.

10. Verfahren nach einem der vorhergehenden Ansprüche,
**dadurch gekennzeichnet, dass**
bei Schritt g) eine Überprüfung erfolgt, ob es sich bei dem empfangenen Datentelegramm um ein Antwortsignal und nicht um ein periodisch verschicktes Signal des Reifenmoduls handelt.

11. Verfahren nach einem der vorhergehenden Ansprüche,
**dadurch gekennzeichnet, dass**
bei Schritt g) eine Überprüfung erfolgt, ob das Reifenmodul sich in einem deaktivierten Zustand befindet,
wobei nachfolgend bei Indentifizierung einer Deaktivierung das Reifenmodul automatisch in einen aktiven Zustand versetzt wird.

12. Verfahren nach einem der vorhergehenden Ansprüche,
**dadurch gekennzeichnet, dass**
der Erfassungsmodus am Erfassungsgerät (13) unterbrochen wird, wenn bei mindestens zwei Messungen zwei Antworttelegramme von unterschiedlichen Reifenmodulen direkt hintereinander empfangen werden und keine eindeutige Reifenposition-Zuordnung erfolgen kann.

13. Verfahren nach einem der vorhergehenden Ansprüche,
**dadurch gekennzeichnet, dass**
der Bediener angewiesen wird das Fahrzeug etwa einen Meter weiter zu fahren und die Messung mit dem Erfassungsgerät (13) am letzten Fahrzeugreifen zu wiederholen, wenn trotz mehrmaliger Messung mit dem Erfassungsgerät (13) keine eindeutige Reifenposition-Zuordnung erfolgen kann.

## Claims

1. Method for assigning tyre positions to a vehicle having a tyre-pressure-monitoring system, comprising the following steps:
a) inputting vehicle data and vehicle tyre information with a mobile detection device (13),
b) analysing the input information with the mobile detection device (13),
c) conveying an instruction to the operator of the mobile detection device (13),
wherein with the instruction the first vehicle tyre (1) is displayed to the operator for the execution of a first tyre module identification process,
d) positioning of the mobile detection device (13) in the vicinity of the first vehicle tyre (1), which is predefined by the detection device (13),
e) activation of an interrogation signal with a transmission frequency which is defined by the detection device (13) and has a predefined signal amplitude, to a tyre module (16) which is arranged in the vehicle tyre (13),
wherein the tyre module (16) comprises at least one sensor for monitoring the tyre pressure, *wherein, when the vehicle tyres (1, 2) and*/*or twin tyres (1, 5) for utility vehicles are arranged directly one behind the other, the mobile detection device (13) adjusts the signal amplitude (14, 15) of the interrogation signal in such a way that a correct assignment of the respective tyre module* to *the corresponding vehicle tyre is made,*
f) detecting a response signal from the tyre module (16), wherein the response signal comprises at least the identification data of the tyre module (16),
g) evaluating the response signal of the tyre module (16) and assigning the identified tyre module (16) to a tyre position on the vehicle,
h) storing the assignment of the identified tyre module (16) in a memory of the detection device (13),
i) indicating a further instruction to the operator of the mobile detection device (13),
wherein with the instruction the next vehicle tyre (2) is displayed to the operator for the execution of a subsequent tyre module identification process,
j) positioning of the mobile detection device (13) in the vicinity of the next vehicle tyre (2) for the execution of a subsequent tyre module identification process,
k) repeating the steps e) to j) until all the tyre modules have been identified and respectively assigned to a tyre position on the vehicle,
l) transmitting the data which has been detected and evaluated with the mobile detection device (13) to a central unit of the tyre-pressure-monitoring system on the vehicle,
wherein the tyre-pressure-monitoring system respectively assigns a tyre module identification to each tyre position on the vehicle,
as a result of which in the case of a tyre pressure warning message the respective tyre position on the vehicle can be displayed to the driver.

2. Method according to Claim 1,
**characterized in that**
in step e) the mobile detection device (13) displays on a display the detection movement of the detection device (13) which is to be carried out at the vehicle tyre,
wherein with the detection movement a starting position (19) on the vehicle tyre, a direction of movement (20) and a rotational speed for the detection device (13) are displayed on the display.

3. Method according to one of the preceding claims,
**characterized in that**
the starting position (19) at the first rear vehicle tyre (1) is at approximately 11 o'clock with respect to an analogue time display, and the direction of movement (20) of the detection device (13) is displayed in the clockwise direction.

4. Method according to one of the preceding claims,
**characterized in that**
the starting position (19) at the subsequent vehicle tyres is at approximately 2 o'clock as a function of the tyre position on the vehicle and with respect to an analogue time display, and the direction of movement of the detection device (13) is displayed counter to the clockwise direction.

5. Method according to one of the preceding claims,
**characterized in that**
in step e) the mobile detection device (13) starts at a twin tyre (1) on the outside of the vehicle with a low signal amplitude of the interrogation signal and subsequently the signal amplitude is increased in 3 steps until the tyre module (16) which is arranged in the twin tyre (1) on the outside of the vehicle responds and a tyre module identification process has taken place.

6. Method according to one of the preceding claims,
**characterized in that**
in step e) the mobile detection device (13) starts at a twin tyre (5) on the inside of the vehicle with a relatively high signal amplitude of the interrogation signal and subsequently the signal amplitude is increased in 3 steps until the tyre module (17) which is arranged in the twin tyre (5) on the inside of the vehicle responds and a tyre module identification process has taken place.

7. Method according to one of the preceding claims,
**characterized in that**,
when multiple twin tyres are provided, firstly all the tyre modules of the tyres on the outside of the vehicle on one side of the vehicle are identified and assigned, wherein subsequently the tyre modules of the tyres on the inside of the vehicle on the same vehicle side are identified and assigned.

8. Method according to one of the preceding claims,
**characterized in that**
in step f) the tyre modules which have already been detected and identified are ignored by the detection device (13) if further response signals are received from these tyre modules by the detection device (13).

9. Method according to one of the preceding claims,
**characterized in that**
in step g) double checking of the response signals takes place, wherein the identification data of the tyre module is not accepted as correct by the detection device (13) until the same identification data is received at least twice in succession in a short time interval by the detection device (13).

10. Method according to one of the preceding claims,
**characterized in that**
in step g) checking is carried out to determine whether the received data telegram is a response signal and is not a periodically transmitted signal of the tyre module.

11. Method according to one of the preceding claims,
**characterized in that**
in step g) checking is carried out to determine whether the tyre module is in a deactivated state,
wherein subsequently when deactivation is detected the tyre module is automatically placed in an active state.

12. Method according to one of the preceding claims,
**characterized in that**
the detection mode at the detection device (13) is interrupted if in the case of at least two measurements two response telegrams from different tyre modules are received directly one after the other and no unambiguous tyre position assignment can be carried out.

13. Method according to one of the preceding claims,
**characterized in that**
the operator is instructed to drive the vehicle further by approximately a metre and to repeat the measurement with the detection device (13) on the last vehicle tyre if, despite repeated measurement with the detection device (13), no unambiguous tyre position assignment can be carried out.

## Revendications

1. Procédé destiné à associer des positions de pneumatique sur un véhicule au moyen d'un système de contrôle de la pression des pneumatiques, présentant les étapes suivantes:
a) entrée de données du véhicule et d'informations sur les pneumatiques du véhicule avec un appareil de saisie mobile (13),
b) analyse des informations entrées avec l'appareil de saisie mobile (13),
c) communication d'une instruction à l'utilisateur de l'appareil de saisie mobile (13), dans lequel le premier pneumatique du véhicule (1) est affiché avec l'instruction à l'utilisateur pour l'exécution de l'identification d'un premier module de pneumatique,
d) positionnement de l'appareil de saisie mobile (13) à proximité du premier pneumatique du véhicule (1), qui est prédéterminé par l'appareil de saisie (13),
e) activation d'un signal d'interrogation avec une fréquence d'émission prédéterminée par l'appareil de saisie (13) avec une amplitude de signal prédéterminée à un module de pneumatique (16) disposé dans le pneumatique de véhicule (13),
dans lequel le module de pneumatique (16) comprend au moins un capteur pour un contrôle de la pression du pneumatique,
dans lequel l'appareil de saisie mobile (13), dans le cas de pneumatiques de véhicule disposés directement l'un derrière l'autre (1, 2) et/ou de pneumatiques jumelés (1, 5) pour des véhicules utilitaires, règle l'amplitude de signal (14, 15) du signal d'interrogation de telle manière qu'il en résulte une association correcte du module de pneumatique respectif avec le pneumatique de véhicule correspondant,
f) détection d'un signal de réponse émanant du module de pneumatique (16), dans lequel le signal de réponse comprend au moins les données d'identification du module de pneumatique (16),
g) évaluation du signal de réponse du module de pneumatique (16) et association du module de pneumatique identifié (16) à une position sur le véhicule,
h) mémorisation de l'association du module de pneumatique identifié (16) dans une mémoire de l'appareil de saisie (13),
i) affichage d'une autre instruction à l'utilisateur de l'appareil de saisie mobile (13),
dans lequel, avec l'instruction à l'utilisateur, on affiche le pneumatique de véhicule suivant (2) pour l'exécution d'une identification du module de pneumatique suivant,
j) positionnement de l'appareil de saisie mobile (13) à proximité du pneumatique de véhicule suivant (2) pour l'exécution d'une identification du module de pneumatique suivant,
k) répétition des étapes e) à j) jusqu'à ce que tous les pneumatiques du véhicule aient été identifiés et respectivement associés à une position de pneumatique sur le véhicule,
l) transmission des données détectées et évaluées avec l'appareil de saisie mobile (13) à une unité centrale du système de contrôle de la pression des pneumatiques sur le véhicule,
dans lequel le système de contrôle de la pression des pneumatiques associe à chaque position de pneumatique sur le véhicule respectivement une identification de module de pneumatique,
grâce à laquelle la position respective du pneumatique sur le véhicule peut être affichée pour le conducteur lors d'un message d'avertissement concernant la pression des pneumatiques.

2. Procédé selon la revendication 1, **caractérisé en ce qu'**à l'étape e) l'appareil de saisie mobile (13) affiche sur un écran le mouvement de détection à exécuter par l'appareil de saisie (13) sur le pneumatique de véhicule, dans lequel on affiche sur l'écran avec le mouvement de détection une position de départ (19) sur le pneumatique de véhicule, une direction de mouvement (20) et une vitesse de rotation pour l'appareil de saisie (13).

3. Procédé selon l'une quelconque des revendications précédentes, **caractérisé en ce que** la position de départ (19) pour le premier pneumatique arrière (1) du véhicule se situe, par rapport à un cadran d'horloge analogique, à environ 11 heures et on affiche la direction de mouvement (20) de l'appareil de saisie (13) dans le sens horaire.

4. Procédé selon l'une quelconque des revendications précédentes, **caractérisé en ce que** la position de départ (19) pour le pneumatique de véhicule suivant se situe, en fonction de la position du pneumatique sur le véhicule et par rapport à un cadran d'horloge analogique, à environ 2 heures et on affiche la direction de mouvement de l'appareil de saisie (13) dans le sens antihoraire.

5. Procédé selon l'une quelconque des revendications précédentes, **caractérisé en ce qu'**à l'étape e) l'appareil de saisie mobile (13) commence, pour un pneumatique jumelé extérieur (1) du véhicule, avec une faible amplitude de signal du signal d'interrogation et l'amplitude du signal est ensuite augmentée en trois étapes, jusqu'à ce que le module de pneumatique (16) disposé dans le pneumatique jumelé extérieur (1) du véhicule réponde et qu'il se produise une identification du module de pneumatique.

6. Procédé selon l'une quelconque des revendications précédentes, **caractérisé en ce qu'**à l'étape e) l'appareil de saisie mobile (13) commence, pour un pneumatique jumelé intérieur (5) du véhicule, avec une amplitude de signal plus élevée du signal d'interrogation et l'amplitude du signal est ensuite augmentée en trois étapes, jusqu'à ce que le module de pneumatique (17) disposé dans le pneumatique jumelé intérieur (5) du véhicule réponde et qu'il se produise une identification du module de pneumatique.

7. Procédé selon l'une quelconque des revendications précédentes, **caractérisé en ce qu'**avec un train de pneumatiques jumelés multiples on identifie et on associe d'abord tous les modules de pneumatique des pneumatiques extérieurs du véhicule sur un côté du véhicule, dans lequel on identifie et on associe ensuite les modules de pneumatique des pneumatiques intérieurs du véhicule du même côté du véhicule.

8. Procédé selon l'une quelconque des revendications précédentes, **caractérisé en ce qu'**à l'étape f) les modules de pneumatique déjà détectés et identifiés sont ignorés par l'appareil de saisie (13), lorsque d'autres signaux de réponse sont reçus de ces modules de pneumatique par l'appareil de saisie (13).

9. Procédé selon l'une quelconque des revendications précédentes, **caractérisé en ce qu'**à l'étape g) on effectue un double contrôle des signaux de réponse, dans lequel les données d'identification du module de pneumatique ne sont acceptées comme correctes par l'appareil de saisie (13) que lorsque les mêmes données d'identification sont reçues au moins deux fois l'une après l'autre en un court intervalle de temps par l'appareil de saisie (13).

10. Procédé selon l'une quelconque des revendications précédentes, **caractérisé en ce qu'**à l'étape g) on vérifie si le télégramme de données reçu est bien un signal de réponse et pas un signal du module de pneumatique envoyé périodiquement.

11. Procédé selon l'une quelconque des revendications précédentes, **caractérisé en ce qu'**à l'étape g) on vérifie si le module de pneumatique se trouve dans un état désactivé, dans lequel, en cas d'identification d'une désactivation, le module de pneumatique est ensuite amené automatiquement dans un état activé.

12. Procédé selon l'une quelconque des revendications précédentes, **caractérisé en ce que** le mode de détection à l'appareil de saisie (13) est interrompu lorsque deux télégrammes de réponse sont reçus directement l'un après l'autre de modules de pneumatique différents lors d'au moins deux mesures et qu'il n'est pas possible d'effectuer une association claire avec une position de pneumatique.

13. Procédé selon l'une quelconque des revendications précédentes, **caractérisé en ce que** l'utilisateur reçoit l'instruction de conduire le véhicule environ un mètre plus loin et de répéter la mesure avec l'appareil de saisie (13) sur le dernier pneumatique de véhicule, lorsque, malgré une mesure répétée avec l'appareil de saisie (13), il n'est pas possible d'effectuer une association claire avec une position de pneumatique.
